# EUROPÄISCHE PATENTSCHRIFT

(11) **EP 0 984 834 B1**
(45) Veröffentlichungstag und Bekanntmachung des Hinweises auf die Patenterteilung: **21.07.2004**
(21) Anmeldenummer: 98928320.5
(22) Anmeldetag: 26.05.1998
(51) Int. Cl.: B05D 1/00

(54) **VERFAHREN UND VORRICHTUNG ZUR SCHICHTDICKEN- INSBESONDERE BONDSCHICHTDICKENREGELUNG**
METHOD AND DEVICE FOR REGULATING THE THICKNESS, SPECIALLY BOND COATING THICKNESS, OF A LAYER
PROCEDE ET DISPOSITIF POUR REGULER L'EPAISSEUR DE COUCHES, EN PARTICULIER DE COUCHES DE REVETEMENT

(30) Priorität: 28.05.1997 DE 19722407
(43) Veröffentlichungstag der Anmeldung: 15.03.2000
(73) Patentinhaber: Singulus Technologies AG, 63755 Alzenau (DE)
(72) Erfinder: BECKER, Wolfgang, D-64850 Schaafheim (DE); RÜTH, Edgar, D-63796 Kaul am Main (DE); GERIGK, Reinhard, D-63571 Gelnhausen (DE); SICHMANN, Eggo, D-63571 Gelnhausen (DE)
(74) Vertreter: VOSSIUS & PARTNER
(86) Internationale Anmeldenummer: PCT/EP1998/003095
(87) Internationale Veröffentlichungsnummer: WO 1998/053919

(56) Entgegenhaltungen:
- EP-A- 0 595 749
- PATENT ABSTRACTS OF JAPAN vol. 018, no. 606 (P-1827), 17.November 1994 & JP 06 223418 A (VICTOR CO OF JAPAN LTD), 12.August 1994,
- PATENT ABSTRACTS OF JAPAN vol. 016, no. 324 (E-1234), 15.Juli 1992 & JP 04 094525 A (TOKYO ELECTRON LTD;OTHERS: 01), 26.März 1992,
- PATENT ABSTRACTS OF JAPAN vol. 015, no. 423 (E-1127), 28.Oktober 1991 & JP 03 178123 A (SHARP CORP), 2.August 1991,
- PATENT ABSTRACTS OF JAPAN vol. 008, no. 285 (E-287), 26.Dezember 1984 & JP 59 151424 A (HITACHI SEISAKUSHO KK), 29.August 1984,
- PATENT ABSTRACTS OF JAPAN vol. 097, no. 003, 31.März 1997 & JP 08 293457 A (DAINIPPON SCREEN MFG CO LTD), 5.November 1996,

## Beschreibung

Die Erfindung betrifft ein Verfahren und eine Vorrichtung zur Schichtdicken- insbesondere Bondschichtdickenregelung und kann insbesondere bei der Herstellung von DVDs (Digital Versatile Discs, d.h. vielseitig beschreibbare und lesbare Speicherplatten) verwendet werden.

In der DE-C1-196 05 601 ist bereits eine Vorrichtung zur gesteuerten Oberflächenbeschichtung beschrieben. Durch eine parallel zu einer Substratoberfläche bewegbare Düse erfolgt ein gleichmäßiger Lackauftrag; und durch einen digital ansteuerbaren Schrittmotor kann während des Betriebs die Düse an jede beliebige Stelle gebracht werden und somit die zu beschichtende Oberfläche bestimmt werden. Der Einfluß der Temperatur des zu beschichtenden Substrats, der Temperatur des Schichtmaterials und seine Viskosität wird bei der Beschichtung nicht berücksichtigt.

Aus der DE-A1-38 22 835 ist ein Verfahren und eine Vorrichtung zum Lackieren von Werkstückoberflächen bekannt. Einer Spritzpistole wird im Verlauf eines Arbeitszyklus eines Roboters über die Robotersteuerung ein kontinuierlich oder schrittweise variierender Sollwert für den Lackfluß vorgegeben. Weiter wird der Lackfluß zur Spritzpistole gemessen und durch Verstellen des Strömungswiderstandes auf der Durchflußstrecke zwischen Farbverteiler und Spritzpistole nach Maßgabe seiner Abweichung vom momentanen Sollwert nachgeführt. Außerdem werden im verlauf eines Arbeitszyklus des Roboters über die Robotersteuerung kontinuierlich oder schrittweise variierende Werte für den Zerstäuber und/oder Hornluftstrom der Spritzpistole eingestellt. Das Verfahren betrifft den Lackauftrag mittels einer Spritzpistole und unterscheidet sich somit grundsätzlich von dem erfindungsgemäßen Beschichtungsverfahren, bei dem das Schichtmaterial über eine Dosierpumpe, einen über das Substrat bewegbaren Dosierarm und mittels eines Rotationsantriebs zum Drehen des Substrats aufgetragen wird. Bei dem bekannten Verfahren geht es im wesentlichen um die Qualität der Lackierung. Insbesondere soll eine Tropfen- oder Klecksbildung beim Lackieren vermieden werden. Daher erfolgt eine Anpassung des Lackflusses an die Zerstäuberluft. Das Problem der Regelung der Dicke des Beschichtungsmaterials ist in der genannten Druckschrift nicht angesprochen worden.

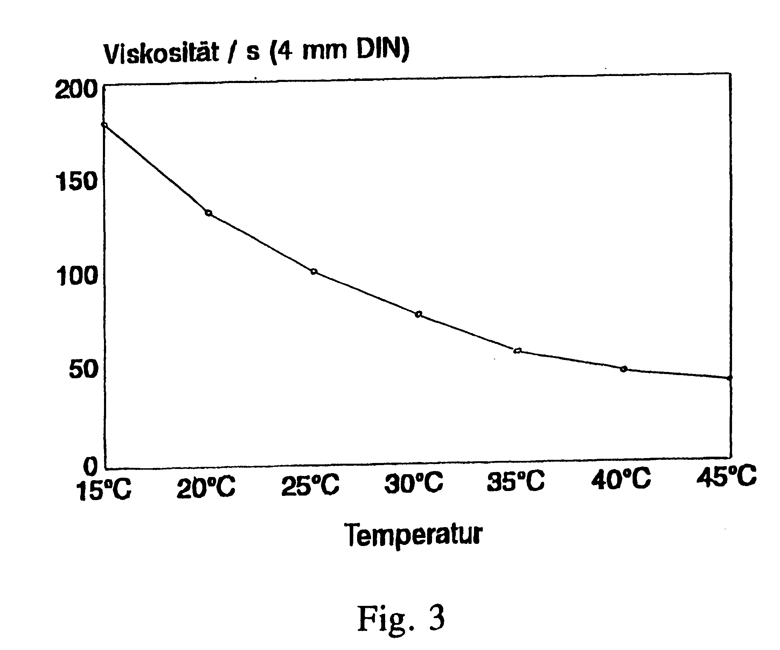

Es wurde gefunden, daß ein reproduzierbarer Zusammenhang zwischen der Temperatur zu beschichtender Substrate, der Temperatur des Schichtmaterials und der Viskosität des Schichtmaterials einerseits und der zu erwartenden Schichtdicke beim Bonden von Substraten besteht. Fig. 3 zeigt z.B. die Abhängigkeit der Viskosität des Bondmaterials von der Temperatur. Es wurde gefunden, daß bei einer Änderung der Substrattemperatur von 40 auf 45°C sich die Bondschichtdicke von 40 auf 35 µm verändert. Für viele Anwendungsfälle, insbesondere bei DVDs ist eine Einhaltung von Bondschichtdicken innerhalb geringer Toleranzen von großer Bedeutung.

Der Erfindung liegt daher die Aufgabe zugrunde, ein Verfahren und eine Vorrichtung zur Schichtdickenregelung zur Verfügung zu stellen, wobei eine reproduzierbare hohe Genauigkeit der Schichtdicke erreicht wird.

Die Aufgabe wird mit den Verfahrensschritten und Merkmalen der unabhängigen Patentansprüche 1 bzw. 12 gelöst.

Bei der Lösung geht die Erfindung von dem Grundgedanken aus, veränderliche Größen (Störgrößen), die während des Beschichtens, insbesondere während des Bondens, die Schicht- bzw.

Bondschichtdicke beeinflussen, zu berücksichtigen und in Abhängigkeit ihres Einflusses das Bonden zu steuern. Die Schichtdicke jedes Substrats wird gemessen und Abweichungen von einem Sollwert werden nachgeregelt. Als veränderliche Größen werden die Temperatur des oder der Substrats/e und die Temperatur des Bondmaterials, die die Viskosität des Bondmaterials beeinflussen, berücksichtigt. Die Einflüsse der Störgrößen auf die Schicht- bzw. Bondschichtdicke werden empirisch ermittelt und die am Beschichtungs- bzw. Bondvorgang beteiligten Aggregate, wie eine Dosierpumpe, ein Dosierarm, ein Rotationsantrieb für den Schichtmaterial- bzw. Bondmaterialauftrag sowie eine Fügeeinrichtung zum Fügen der Substrate und ein Rotationsschleuderantrieb werden nach einem die Einflüsse der Störgrößen berücksichtigenden Algorithmus gesteuert, um eine Schichtdicke entsprechend einem vorgegebenen Sollwert zu erreichen.

Der Vorteil der Erfindung liegt in einer sehr genauen Schichtdickeneinstellung und einer geringen Ausschußrate bei z.B. mit der Erfindung hergestellten DVDs, so daß eine erhöhte Ausbeute des Herstellungsprozesses erreicht wird.

Im folgenden wird die Erfindung anhand der Zeichnungen näher erläutert. Es zeigen:
- Fig. 1a bis c): eine schematische Darstellung des Bondverfahrens, bei dem die Erfindung zum Einsatz kommen kann,
- Fig. 2: ein Blockschaltbild der erfindungsgemäßen Programmsteuerung und
- Fig. 3: ein Diagramm, das die Abhängigkeit der Viskosität des Bondmaterials von der Temperatur darstellt.

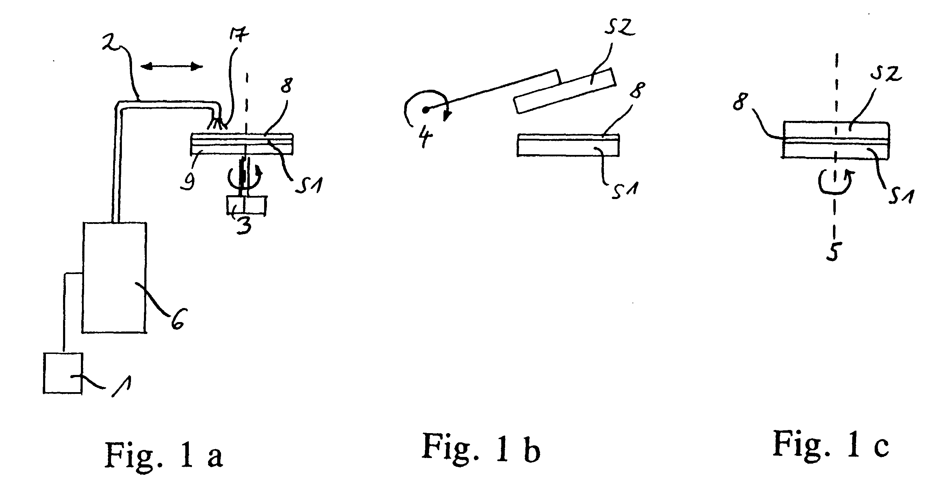

Fig. 1a kann allein als Darstellung des Beschichtungsvorganges generell betrachtet werden. Dabei wird Schicht/Bondmaterial 7 mittels einer Dosierpumpe 1 aus einem Vorratsbehälter 6 gepumpt und über einen Dosierarm 2 auf ein Substrat S1 gesprüht. Der Dosierarm 2 ist gegenüber dem Substrat 1 in der Höhe verstellbar und radial über das Substrat bewegbar. Das Substrat S1 befindet sich auf einem Teller 9, der durch einen Rotationsantrieb 3 in rotierender Bewegung gehalten wird. Dabei wird auf dem Substrat S1 die Schicht 8 ausgebildet. Da der Beschichtungsprozeß und das dabei eingesetzte Material bzw. das Substrat im allgemeinen keine konstante Temperatur aufweisen, weisen das Schicht/Bondmaterial, und das Substrat bzw. die Substrate veränderliche Temperaturen auf.

Beim Bonden zweier Substrate plaziert eine Fügeeinrichtung das zweite Substrat S2 auf dem beschichteten Substrat S1 (Fig. 1b).

Weiterhin erfolgt beim Bonden nach dem Fügen ein Abschleudern von überschüssigem Bondmaterial der Schicht 8 zwischen den Substraten S1 und S2 durch einen Rotationsschleuderantrieb 5 (Fig. 1c).

Die Prozesse gemäß Figuren 1b und 1c beeinflussen bei einem Bondvorgang z.B. durch den Fügedruck und die Geschwindigkeit des Rotationsschleuderantriebs 5 gleichfalls die zu erwartende Bondschichtdicke.

Es wurde gefunden, daß der z.B. in den Figuren 1a bis c dargestellte Bondprozeß durch Störgrößen wie die Temperatur T1 und T2 der Teilsubstrate S1 bzw. S2, die Temperatur T3 des Bondmaterials und die Viskosität des Bondmaterials beeinflußt wird, so daß die Bondschichtdicke von einem eingestellten Sollwert, der nur von dem Bondmaterialfluß, seiner Verteilung auf einem Substrat und der Rotationsgeschwindigkeit des Substrats abhängt, abweicht.

Erfindungsgemäß werden reproduzierbare Zusammenhänge zwischen der Temperatur, der Viskosität des Schichtmaterials und Bondschichtdicke empirisch ermittelt und in Form von Wertetabellen bzw. Kurvenfunktionen dargestellt (siehe Fig. 3). Die ermittelten funktionalen Zusammenhänge werden zur Grundlage eines Steuerungsprogrammes für die Aggregate des Beschichtungsprozesses gemacht.

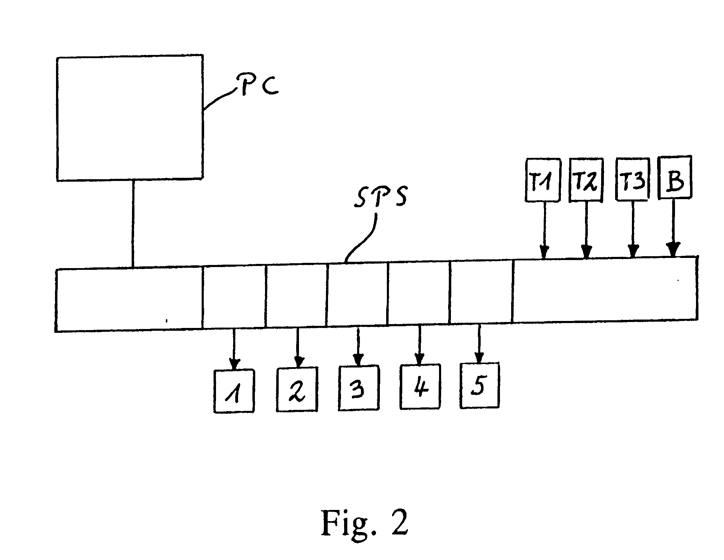

Fig. 2 zeigt ein Blockschaltbild für die Steuerung der Bondaggregate.

Es ist ein Rechner PC mit einer speicherprogrammierbaren Steuerung (SPS) vorgesehen. Der SPS werden die Störgrößen, wie die Temperaturen T1 und T2 der Teilsubstrate S1 bzw. S2 und Temperatur T3 des Bondmaterials 7 und die Art oder der Typ B des Bondmaterials eingegeben. Über den PC erfolgt die Sollwertvorgabe. Entsprechend einer angepaßten Software erfolgt dann über Ausgänge 1, 2, 3, 4 und 5 der SPS die Ansteuerung der entsprechenden Bondaggregate:Dosierpumpe 1, Dosierarm 2, Rotationsantrieb 3 für den Bondmaterialauftrag, Fügeeinrichtung 4 und Rotationsschleuderantrieb 5. Die entsprechenden Bondaggregate wirken dann z.B. durch Erhöhung oder Senkung der Bondmaterialzufuhr, der Rotationsgeschwindigkeiten und/oder -zeit und des Fügedrucks einer durch die Temperaturänderung bewirkten Abweichung der Bondschichtdicke vom Sollwert entgegen.

Eine erfindungsgemäße Vorrichtung zur Durchführung eines Verfahrens zur Bondschichtdickenregelung weist bevorzugt Sensoren zur Messung der Störgrößen, eine Einrichtung zur Überwachung der Bondschichtdicke während des Prozesses und einen Prozessor mit einem PC und einer SPS zum Steuern des Bondens in Abhängigkeit von den Störgrößen und den gemessenen Bondschichtdicken auf. Vorzugsweise ist der Sensor zum Messen der Bondschichtdicke ein optischer Sensor.

Vorzugsweise sind mehrere Sensoren für die Messung der Schichtdicke in unterschiedlichem radialen Abstand zur Drehachse des Rotationsantriebs 3 vorgesehen, um an mehreren Stellen die Schichtdicke zu messen und der Steuerung PC/SPS zuzuführen.

Bei der Anwendung des erfindungsgemäßen Verfahrens und der erfindungsgemäßen Vorrichtung bei der Herstellung von optischen Speicherplatten (DVDs) wird ein Sollwert der Bondschichtdicke von z.B. 55 µm eingestellt, der in radialer Richtung eine Tolerenz von ±10 µm und in tangentialer Richtung eine Toleranz von ±4 µm aufweist.

Außer bei der Regelung von Bondschichtdicken kann das erfindungsgemäße Verfahren und die erfindungsgemäße Vorrichtung auch bei der genauen Regelung der Dicke von anderen viskosen Schichten auf Oberflächen, wie z.B. Lackschichten, zum Einsatz kommen.

## Patentansprüche

1. Verfahren zum Auftragen dünner Schichten aus einer viskosen Flüssigkeit auf ebene Substrate, insbesondere zum Ausbilden von Bondschichten zwischen Teilsubstraten (S1, S2) oder von Lackauftragsschichten auf Substraten, unter Verwendung einer Dosierpumpe (1) für das Schichtmaterial (7), eines über das Substrat (S1) bewegbaren Dosierarms (2) und eines Rotationsantriebs(3) zum Drehen des Substrats (S1) und einer Regelung für die Schichtdicke auf einen Sollwert, wobei die Regelung unter Berücksichtigung des Einflusses von veränderlichen Größen (Störgrößen) die Stellgrößen für die Dosierpumpe, dem Dosierarm und/oder den Rotationsantrieb steuert.

2. Verfahren nach Anspruch 1, **dadurch gekennzeichnet, daß** die berücksichtigten Störgrößen die Temperatur (T1, T2) der Substrate (S1 bzw. S2) und die Temperatur (T3) des Schichtmaterials (7) sind.

3. Verfahren nach Anspruch 1 oder 2, **dadurch gekennzeichnet, daß** der Einfluß der Störgrößen empirisch ermittelt wird.

4. Verfahren nach Anspruch 1 bis 3, wobei als weitere Stellgrößen eine Fügeeinrichtung (4) zum Fügen der Substrate (S1, S2) nach der Ausbildung von Bondschichten und ein Rotationsschleuderantrieb (5) zum Abschleudern von überschüssigem Bondmaterial zwischen den Substraten (S1 und S2) nach dem Fügen gesteuert werden.

5. Verfahren nach Anspruch 1 bis 4, **dadurch gekennzeichnet, daß** das Beschichten/Bonden mittels eines PC/SPS (Personalcomputer mit speicherprogrammierbarem System) -Programm gesteuert wird.

6. Verfahren nach Anspuch 5, **dadurch gekennzeichnet, daß** die Dosierpumpe (1) , der Dosierarm (2), der Rotationsantrieb (3) und/oder die Fügeeinrichtung (4) durch Schrittmotore betrieben werden. und der Rotationsschleuderantrieb (5) ein Servomotor ist.

7. Verfahren nach einem der Ansprüche 1 bis 6, **dadurch gekennzeichnet, daß** die Schicht/Bondschichtdicken während des Prozesses berührungsfrei gemessen und Abweichungen von dem Sollwert automatisch nachgeregelt werden.

8. Verfahren nach Anspruch 7, **dadurch gekennzeichnet, daß** der Sollwert ein vorbestimmter Schichtdickenbereich in radialer und tangentialer Richtung des Substrats ist.

9. Verfahren nach Anspruch 7 oder 8, **dadurch gekennzeichnet, daß** der Sensor ein optischer Sensor ist.

10. Anwendung des Verfahrens nach einem der Ansprüche 1 bis 9 bei der Herstellung von optischen Speicherplatten.

11. Anwendung nach Anspruch 10, **dadurch gekennzeichnet, daß** die Abweichung der Bondschichtdicke bei einem Sollwert von 55 µm ±10 µm in radialer Richtung und ±4 µm in tangentialer Richtung beträgt.

12. Vorrichtung zur Durchführung des Verfahrens nach einem der Ansprüche 1 bis 9 mit
(a) Sensoren zur Messung von Störgrößen beim Beschichten/Bonden von Substraten,
b) einer Einrichtung zur Messung der Schicht/Bondschichtdicke während des Prozesses, und
(c) einem Prozessor zum Steuern des Beschichtens/Bondens in Abhängigkeit von den Störgrößen und der gemessenen Schicht/Bondschichtdicke mittels einer Steuerbaren Dosierpumpe (1), einem Dosierarm (2) und/oder mittels eines Rotationsantriebs (3, 5).

## Claims

1. A method for applying thin coatings or layers of a viscous fluid onto plane substrates, in particular for forming bond layers between partial substrates (S1, S2) or coatings of lacquer on substrates thereby using a dosing pump (1) for the coating material (7), a dosing arm (2) which is movable over the substrate (S1 ) and a rotary drive (3) for rotating the substrate (S1), and means for regulating the layer thickness to a desired value, wherein said regulator means controls the controlled variables for the dosing pump, the dosing arm and/or the rotary drive thereby taking into account the influence of varying variables (disturbance variables).

2. The method according to claim 1, **characterized in that** the disturbance variables which are taken into account are the temperatures (T1, T2) of the respective substrates (S1, S2) and the temperature (T3) of the coating material (7).

3. The method according to claim 1 or 2, **characterized in that** the influence of the disturbance variables is determined empirically.

4. The method according to claims 1 to 3, wherein a connecting means (4) for connecting the substrates (S1, S2) after the formation of bond layers and a rotary centrifugal drive (5) for spinning off excess bonding material between the substrates (S1 and S2) after connection are controlled as further controlled variables.

5. The method according to claims 1 to 4, **characterized in that** the coating/bonding is controlled by means of a PC/SPS (personal computer with stored program system) program.

6. The method according to claim 5, **characterized in that** the dosing pump (1), the dosing arm (2), the rotary drive (3), and/or the connecting means (4) are operated by step motors and that the rotary centrifugal drive (5) is a servomotor.

7. The method according to any one of claims 1 to 6, **characterized in that** the thickness of the coating/bond coating is measured during the process in a non-contacting manner and that deviations from the desired value are readjusted automatically.

8. The method according to claim 7, **characterized in that** the desired value is a predetermined coating thickness range in the radial and tangential directions of the substrate.

9. The method according to claim 7 or 8, **characterized in that** the sensor is an optical sensor.

10. The use of the method according to any one of claims 1 to 9 in the production of optical storage disks.

11. The use according to claim 10, **characterized in that** at a desired value of the bond layer thickness of 55 µm, the deviation or tolerance of the bond layer thickness is ± 10 µm in the radial direction and ± 4 µm in the tangential direction.

12. A device for carrying out the method according to any one of claims 1 to 9 comprising
(a) sensors for measuring disturbance variables during coating/bonding of substrates,
(b) a means for measuring the thickness of the coating/bond coating during the process, and
(c) a processor for controlling coating/bonding in response to the disturbance variables and the measured thickness of the coating/bond coating by means of a controllable dosing pump (1), a dosing arm (2) and/or by means of a rotary drive (3, 5).

## Revendications

1. Procédé d'application de couches minces formées d'un liquide visqueux sur des substrats plans, en particulier pour réaliser des couches d'adhésion entre des substrats partiels (S1, S2), ou des couches d'application de vernis sur des substrats, en utilisant une pompe de dosage (1) pour le matériau de couche (7), un bras de dosage (2), déplaçable au-dessus du substrat (S1), et un entraînement rotatif (3) pour faire tourner le substrat (S1), et une régulation pour que l'épaisseur de couche soit réglée à une valeur de consigne, la régulation, en prenant en compte l'influence de grandeurs variables (grandeurs perturbatrices), commandant les grandeurs de réglage de la pompe de dosage, du bras de dosage et/ou de l'entraînement rotatif.

2. Procédé selon la revendication 1, **caractérisé en ce que** les grandeurs parasites prises en compte sont la température (T1, T2) des substrats (S1 et/ou S2) et la température (T3) du matériau de couche (7).

3. Procédé selon la revendication 1 ou 2, **caractérisé en ce que** l'influence des grandeurs parasites est déterminée de façon empirique.

4. Procédé selon les revendications 1 à 3, sachant que l'on commande, à titre d'autres grandeurs de réglage, un dispositif de jointoiement (4), pour jointoyer les substrats (S1, S2) après avoir réalisé des couches d'adhésion, et un entraînement éjecteur rotatif (5), pour éjecter le matériau d'adhésion en excès entre les substrats (S1 et S2) après le jointoiement.

5. Procédé selon les revendications 1 à 4, **caractérisé en ce que** l'enduction/adhésion est commandée à l'aide d'un programme pour PC/SPS (ordinateur personnel muni d'un système à mémoire programmable).

6. Procédé selon la revendication 5, **caractérisé en ce que** la pompe de dosage (1), le bras de dosage (2), l'entraînement rotatif (3), et/ou le dispositif de jointoiement (4) sont actionnés par des moteurs pas à pas et l'entraînement éjecteur rotatif (5) est un servomoteur.

7. Procédé selon l'une des revendications 1 à 6, **caractérisé en ce que** les épaisseurs de couche/de couche d'adhésion sont mesurées sans contact pendant le processus et les écarts par rapport à la valeur de consigne font l'objet d'une reprise de réglage automatique.

8. Procédé selon la revendication 7, **caractérisé en ce que** la valeur de consigne est une plage d'épaisseurs de couche prédéterminée, en direction radiale et tangentielle du substrat.

9. Procédé selon la revendication 7 ou 8, **caractérisé en ce que** le capteur est un capteur optique.

10. Application du procédé selon l'une des revendications 1 à 9, dans la fabrication de plaques ou disques de mémoires optiques.

11. Application selon la revendication 10, **caractérisée en ce que** l'écart entre l'épaisseur de couche d'adhésion pour une valeur de consigne de 55 µm est de ± 10 µm en direction radiale et ± 4 µm en direction tangentielle.

12. Dispositif de mise en oeuvre du procédé selon l'une des revendications 1 à 9, comportant :
a. des capteurs pour mesurer des grandeurs perturbatrices lors de l'enduction/adhésion de substrats,
b. un dispositif de mesure de l'épaisseur de couche/couche d'adhésion pendant le processus, et
c. un processeur pour commander l'enduction/l'adhésion en fonction des grandeurs perturbatrices et de l'épaisseur de couche/épaisseur de couche d'adhésion mesurée, à l'aide d'une pompe de dosage (1), d'un bras de dosage (2) et/ou à l'aide d'un entraînement rotatif (3,5) pouvant être commandés.
